# EUROPEAN PATENT SPECIFICATION

(11) **EP 0 539 094 B1**
(45) Date of publication and mention of the grant of the patent: **10.04.1996**
(21) Application number: 92309409.8
(22) Date of filing: 15.10.1992
(51) Int. Cl.: H02K 23/66, H02K 5/22

(54) **A miniature electric motor**
Elektrischer Kleinmotor
Moteur électrique miniature

(30) Priority: 22.10.1991 JP 273661/91
(43) Date of publication of application: 28.04.1993
(73) Proprietor: MABUCHI MOTOR KABUSHIKI KAISHA, Matsudo-shi, Chiba-ken (JP)
(72) Inventor: Suzuki, Satoshi, Mabuchi Motor Kabushiki Kaisha, Matsudo-shi, Chiba-ken (JP); Kajie, Naoshi, Mabuchi Motor Kabushiki Kaisha, Matsudo-shi, Chiba-ken (JP)
(74) Representative: Hitchcock, Esmond Antony

(56) References cited:
- EP-A- 0 056 756
- EP-A- 0 175 992
- EP-A- 0 360 623
- GB-A- 2 232 011
- GB-A- 2 246 672
- PATENT ABSTRACTS OF JAPAN, vol. 6, no. 77 (E-106)(955), 14 May 1982;& JP-A-57 016 550

## Description

This invention relates to a miniature electric motor of the type in which power is fed to the motor rotor via printed-circuit boards on which control equipment is mounted, or printed-circuit boards connected to control circuits. Typically, in such a motor a printed-circuit board will be connected directly to the motor input terminals.

When mounting a printed-circuit board (hereinafter referred to as a "PCB") on a miniature electric motor, electrical connections are normally made directly by soldering to the input terminals of the motor. However, lead wires or separately provided connectors may be used. Alternatively, connector pins for mounting PCBs may be incorporated inside the miniature motor.

Soldering PCB connections directly to motor input terminals requires a high level of skill in performing complicated soldering operations in an extremely limited space in a miniature motor. This poses a problem in improving productivity in the mass production of miniature motors.

Connecting a PCB to the motor input terminals via lead wires or connectors also normally involves soldering operations, as noted above, making the entire assembly work complex. In addition, the presence of such lead wires between the PCBs and the miniature motor requires additional space. This makes it difficult to make the entire motor unit compact in size. With each of these techniques some additional assembly work is required after a PCB has been mounted. This leads to increased manufacturing cost.

When connector pins are incorporated inside miniature motors, a particular design is needed, requiring an increase in the number of production items. This is not suitable for mass production requiring component standardization, and leads to increased cost. Further, since conventional PCB-mounting connector pins are normally made in a resilient material that is caused to bite into a PCB, upon mounting, it is difficult to remove a PCB once mounted, and replace it after removal. This construction cannot easily cope with the need for detachability of PCBs in miniature motors.

An electric motor is disclosed in European Specification No. 0,056,756 in which connecting wires leading from the motor stator are attached to a PCB connector. The connector is disposed within the motor case and clips to the edges of an opening in the case. Spring elements are provided on the connector to engage a PCB when inserted through the opening.

European Specification No. 0,360,623 describes a splashproof cover for a motor which provides a socket for connection to a power supply. The cover fits over the end cap of a motor. Two conductors are moulded into the cover, each having a slot for receiving a respective motor terminal, and a tongue for fastening to a corresponding slot formed in the motor end cap.

The present invention is an adaptation of a known miniature electric motor construction having a cylindrical case closed at one end and a permanent magnet fitted to the inner surface thereof; an end plate closing the open end of case; a rotor rotatably supported by bearings on the case and the end plate; input terminals mounted in the end plate; and means enabling a printed circuit board to be connected to the terminals in an electrical circuit for coupling the rotor to an electric power source. According to the invention a connector unit for a printed circuit board is mounted on the input terminals, which unit comprises a body with connection elements, each element having a contact at one end for engaging a motor input terminal and a retainer piece at the other end, the retainer pieces cooperating to provide a mount for the printed circuit board and extending into an opening in the connector body from one side, which opening defines an insertion hole on the other side of the body for receiving an edge of a printed circuit board. The connector unit is preferably designed to fit adjacent the motor end plate to minimise additional space requirements. The unit would normally be fitted over the motor input terminals external of the motor case, but in some embodiment it can be mounted internally. Thus, the PCB can be connected between the input terminals and the motor rotor connections, such as brushes, commutator etc., or between the power source and the input terminals, which is the preferred arrangement and facilitates the removal and replacement of the PCB.

Embodiments of the invention will now be described by way of example and with reference to the accompanying drawings wherein:
Figure 1 is a longitudinal partly sectional view of a miniature motor suitable for adaptation according to the present invention;
Figure 2 is an exploded perspective view illustrating the installation of a connector unit according to one embodiment of the invention;
Figure 3 is an exploded perspective view showing the inner face of the connector-unit body and a connection element of the unit shown in Figure 2.
Figure 4 is a cross-sectional view of the connector unit shown in Figures 2 and 3;
Figure 5 is a detail cross-sectional view showing the connector unit fitted to the end plate and the connection with a motor input terminal;
Figure 6 is another detail cross-sectional view showing the connector unit fitted around a central boss on the end plate;
Figure 7 is a partially cross-sectional view illustrating an alternative means by which the connector unit may be fixedly fitted to the end plate;
Figure 8 is an exploded perspective view similar to Figure 2, but illustrating another embodiment of the invention;
Figure 9 is an exploded perspective view showing the inner face of the connector-unit body and a connection element of the unit shown in Figure 8; and
Figure 10 is a perspective view showing the inner face of the assembled unit of Figure 8.

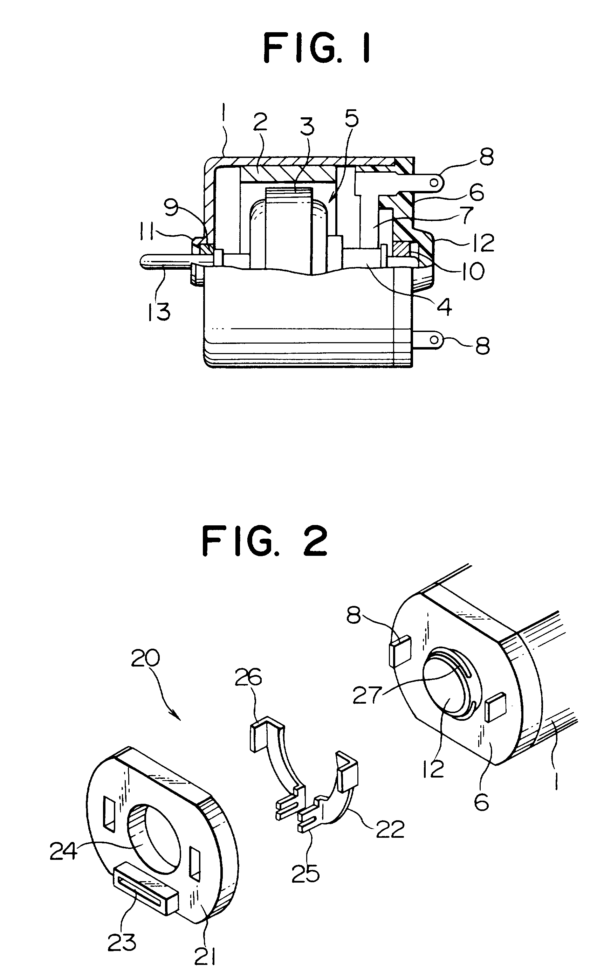

As shown in Figure 1, a miniature motor to which this invention may be applied has a case 1 made of a soft magnetic material, such as mild steel, formed into a bottomed hollow cylindrical shape and having a permanent magnet 2 of an arc-segment shape fixedly fitted to the inner surface thereof. A rotor 5 is mounted in the case 1, which rotor comprises an armature 3 facing the permanent magnet 2 and a commutator 4. An end plate 6 made of an insulating material engages and closes the open end of the case 1. Bearings 9 and 10 are fixedly fitted in bearing holders 11 and 12 provided by embossing the bottom part of the case 1 and the end plate 6, respectively, and rotatably supporting a shaft 13, upon which the rotor is mounted.

Reference 7 indicates a brush arm made of an electrically conductive material provided on the end plate 6, connected to an input terminal 8. The brush arm 7 makes sliding contact with the commutator 4 as the rotor turns. Thus, as electric current is fed to the input terminals 8 the motor operates in known manner to drive external equipment (not shown) via the rotating shaft 13.

The connector unit shown in Figure 2 has a body 21 and connection elements 22. The body 21 is made of an insulating material and formed into substantially a plate shape, with the outer contour thereof substantially similar to that of the end plate 6. The connection elements 22 are made of an electrically conductive material and formed into a strip shape of an almost arc-segment shape, and fitted to the connector-unit body 21, forming a pair. At the ends of each connection element 22 are a retainer piece 25 and a contact 26 formed by bending the ends thereof by pressing means, for example. The retainer pieces 25 cooperate to provide a mount for a printed circuit board (PCB) 31 within a recess 23, as described below. The contacts 26 serve to make electrical connections with the input terminals 8.

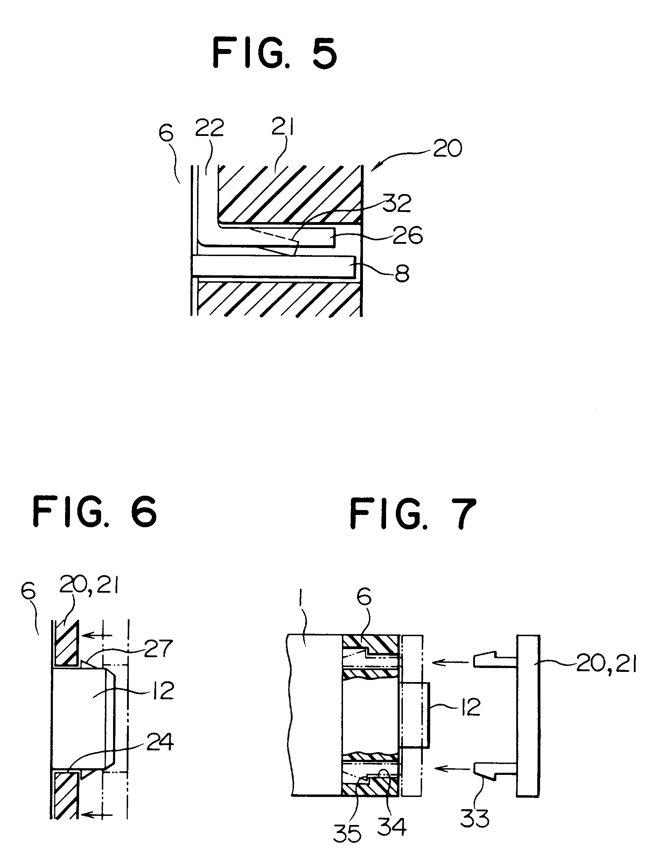

The body 21 is also formed with a central opening 24 to facilitate the mounting of the unit 20 on the end plate 6. A boss 12 is formed on the external face of the end plate 6 with lateral projections 27. When the unit is mounted, the boss 12 projects through the opening 24, and is held in place by the projections 27, as shown in Figure 6.

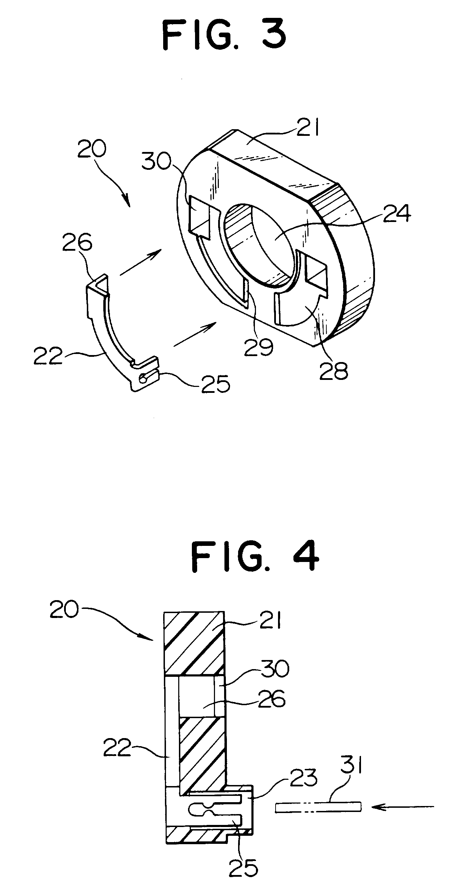

As shown in Figure 3, recesses 28 are formed on the rear or inner surface of the body 21 to a depth corresponding to the thickness of the connection elements 22, and holes 29 and 30 are provided at the ends of the recesses 28 for receipt of the retainer pieces 25 and contacts 26 respectively. With the elements 22 fitted to the body 21, a PCB 31 can be readily mounted on the unit in the recess 23, as shown in Figure 4. This will normally be effected only after the unit 20 has been fitted to the end plate 6 of the motor. The PCB 31 can be held in position at a predetermined pressure by the elastic deformation of the retainer pieces 25. The PCB can be extracted by exerting a moderate degree of pulling force.

In Figure 5 a lanced and raised part 32 formed in the middle of the contact 26 of a connection element 22 is shown resiliently engaged with an input-terminal 8. as the connector unit 20 is mounted on the end plate 6, the lanced and raised part 32 makes contact with the input terminal 8 by a predetermined elastic force, thus establishing and maintaining an electrical connection.

Figure 6 shows the mounting of the connector unit 20 on the end plate 6, as described above. Figure 7 illustrates an alternative technique. In Figure 7, engaging pieces formed integrally with the connector-unit body 21, with the tips thereof formed into an arrowhead shape protrude from the connector-unit body 21. Matching insertion holes 34 are provided at locations on the end plate 6 corresponding to the engaging pieces 33 and having locking parts 35. With this arrangement, as the connector unit 20 is mounted on the end plate 6 in the direction shown, the engaging pieces 33 enter the holes 34, and the tips of the engaging pieces 33 are locked by the locking parts 35.

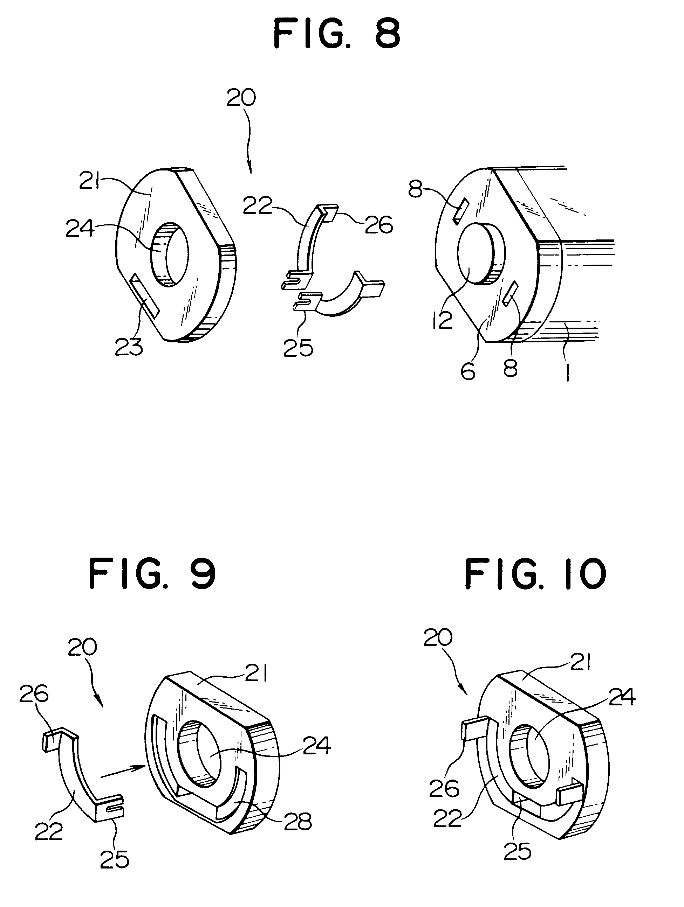

In the embodiment of the invention shown in Figures 8 to 10 the input terminals 8 are so-called female terminals existing on the end plate 6, unlike the male terminals shown in Figures 1 and 2. The contacts 26 therefore extend away from the connector body 21 such that they project into the end plate 6 when the unit 21 is mounted to engage the input terminals 8. In other respects, the construction of the unit of Figures 8 to 10 is substantially the same as that previously described.

The present invention offers the following particular benefits.
(1) PCBs can be mounted on a miniature motor merely by fitting a connector unit as described herein to the end plate of the miniature motor. This leads to a substantial improvement in working efficiency.
(2) The miniature motor of this invention has great versatility, and can satisfy both terminal specifications and PCB specifications, depending on customers' needs. This lends itself to standardization of miniature motors and helps reduce manufacturing costs.
(3) Since the connector unit is compact in size, little or no modification is needed even after it is incorporated in a miniature motor. this meets the market's needs for downsizing the motors.
(4) The PCBs are detachable from the motors which facilitates maintenance of the motors during their working life.

## Claims

1. A miniature motor having a cylindrical case (1) closed at one end and a permanent magnet (2) fitted to the inner surface thereof; an end plate (6) closing the open end of case; a rotor (5) rotatably supported by bearings (9,10) on the case (1) and the end plate (6); input terminals (8) mounted in the end plate (6); and means enabling a printed circuit board to be connected to the terminals in an electrical circuit for coupling the rotor to an electric power source
CHARACTERISED IN THAT
a connector unit (20) for a printed circuit board (31) is mounted on the input terminals (8), which unit comprises a body (21) with connection elements (22), each element having a contact (26) at one end for engaging a motor input terminal (8) and a retainer piece (25) at the other end, the retainer pieces (25) cooperating to provide a mount for a said printed circuit board (31), the retainer pieces (25) extending into an opening in the connector body (21) from one side, which opening defines an insertion hole (23) on the other side of the body (21) for receiving an edge of a printed circuit board.

2. A miniature motor according to Claim 1 CHARACTERISED IN THAT the connection elements (22) are received in recesses (28) in the connector body (21), each recess being enlarged in the region of the respective contact (26) to receive an input terminal adjacent thereto.

3. A miniature motor according to Claim 1 or Claim 2 CHARACTERISED IN THAT the connector body (21) is substantially equivalent in shape to the motor end plate (6) and made of an insulating material.

4. A miniature motor according to any preceding Claim CHARACTERISED IN THAT each connection element is in the shape of an arcuate plate segment, the contacts (26) and retainer pieces (25) being formed by bending sections from said plate.

5. A miniature motor according to any preceding Claim CHARACTERISED IN THAT the contacts (26) and the retainer pieces (25) project in the same direction into the connector body (21).

6. A miniature motor according to any of Claims 1 to 4 CHARACTERISED IN THAT the contacts (26) and the retainer pieces (25) project in opposite directions with the retainer pieces (25) projecting into the connector body.

7. A miniature motor according to any preceding Claim CHARACTERISED IN THAT a bearing holder forms a projection (12) on the outer end face of the end plate (6), the connector-unit body (21) being formed with a central opening or recess (24) which engages the projection (12) to secure the connector unit thereon.

8. A miniature motor according to any preceding Claim CHARACTERISED IN THAT engaging pieces (33) are formed on the connector unit body (21), which pieces are received in insertion holes (34) formed in the end plate (6) to secure the connector unit on the end plate.

9. A miniature motor according to any preceding Claim CHARACTERISED IN THAT the connector unit (20) is fitted to the end plate (6) externally of the motor case (1).

## Patentansprüche

1. Ein Kleinmotor, der ein zylindrisches Gehäuse (1), das an einer Seite geschlossen ist, und einen Permanentmagneten (2) aufweist, der im Inneren desselben eingepaßt ist, sowie eine Endplatte (6), die das offene Ende des Gehäuses abschließt, und einen Rotor (5), der mit Lagern (9,10) ) drehbar in dem Gehäuse (1) und der Endplatte (6) gelagert ist, wobei Anschlussklemmen (8) in die Endplatte (6) montiert sind, und Vorrichtungen, die es ermöglichen, daß eine Leiterplatte mit den Anschlußklemmen in einem elektrischen Schaltkreis verbunden werden kann, um den Rotor an die Spannungsquelle anzuschließen,
**dadurch gekennzeichnet,**
daß eine Verbindungseinheit (20) für eine Leiterplatte (31) auf die Anschlußklemmen (8) montiert wird, und diese Einheit einen Körper (21) und Verbindungsglieder (22) umfasst, wobei jedes Glied einen Kontakt (26) für die Verbindung mit einer Motoranschlußklemme (8) an einem Ende, und ein Befestigungsstück (25) am anderen Ende aufweist, und die Befestigungsstücke (25) so zusammenwirken, daß sie eine Halterung für die Leiterplatte (31) bilden, wobei die Befestigungsstücke (25) in eine Öffnung in dem Verbindungskörper (21) von einer Seite hineinreichen und die Öffnung an der anderen Seite des Körpers (21) ein Einschiebeloch darstellt, das eine Kante der Leiterplatte aufnimmt.

2. Ein Kleinmotor nach Anspruch 1,
**dadurch gekennzeichnet,**
daß die Verbindungsglieder (22) in Aussparungen (28) im Verbindungskörper (21) eingefügt sind, wobei jede Aussparung im Bereich des jeweiligen Kontaktes (26) verbreitert ist, um danebenliegend eine Anschlußklemme aufzunehmen.

3. Ein Kleinmotor nach Anspruch 1 oder Anspruch 2,
**dadurch gekennzeichnet,**
daß der Verbindungskörper (21) von der Form her im wesentlichen der Endplatte (6) des Motors entspricht, und aus isolierendem Material hergestellt ist.

4. Ein Kleinmotor nach einem der vorhergehenden Ansprüche,
**dadurch gekennzeichnet,**
daß jedes Verbindungsglied die Form eines flachen bogenförmigen Teiles aufweist, wobei die Kontakte (26) und Befestigungsstücke (25) geformt werden, indem man Abschnitte dieses flachen Teiles umbiegt.

5. Ein Kleinmotor nach einem der vorhergehenden Ansprüche,
**dadurch gekennzeichnet,**
daß die Kontakte (26) und die Befestigungsstücke (25) in derselben Richtung in den Verbindungskörper hineinragen.

6. Ein Kleinmotor nach den Ansprüchen 1 bis 4,
**dadurch gekennzeichnet,**
daß die Kontakte (26) und die Befestigungsstücke (25) in entgegengesetzte Richtungen hervorragen, wobei die Befestigungsstücke (25) in den Verbindungskörper hineinragen.

7. Ein Kleinmotor nach einem der vorhergehenden Ansprüche,
**dadurch gekennzeichnet,**
daß eine Lagerhalterung an der Außenseite der Endplatte (6) einen Fortsatz (12) bildet, und der Verbindungskörper (21) mit einer mittigen Öffnung oder Aussparung (24) versehen ist, die den Fortsatz (12) aufnimmt, um die Verbindungseinheit darauf zu befestigen.

8. Ein Kleinmotor nach einem der vorhergehenden Ansprüche,
**dadurch gekennzeichnet,**
daß Eingriffslaschen (33) am Verbindungskörper (21) ausgeführt sind, wobei die Laschen in Einsetzöffnungen (34) in der Deckplatte (6) eingebracht werden, um den Verbindungskörper an der Endplatte zu befestigen.

9. Ein Kleinmotor nach einem der vorhergehenden Ansprüche,
**dadurch gekennzeichnet,**
daß die Verbindungseinheit (20) außerhalb des Motorgehäuses (1) an die Endplatte (6) angepaßt ist.

## Revendications

1. Moteur miniature ayant une enveloppe cylindrique (1) fermée à une extrémité et un aimant permanent (2) fixé sur la surface interne de celle-ci; une plaquette d'extrémité (6) fermant l'extrémité ouverte de l'enveloppe; un rotor (5) supporté de façon pivotante par des roulements (9, 10) sur l'enveloppe (1) et la plaquette d'extrémité (6); des bornes d'entrée (8) montées dans la plaquette d'extrémité (6); et des moyens permettant de connecter une carte à circuits imprimés aux bornes d'un circuit électrique pour coupler le rotor à une source de courant électrique,
caractérisé en ce que
un ensemble connecteur (20) pour carte à circuits imprimés (31) est monté sur les bornes d'entrée (8), ensemble qui comprend un corps (21) avec des éléments de connexion (22), chaque élément ayant à une extrémité un contact (26) conçu pour s'emboîter sur une borne d'entrée du moteur (8) et une pièce de retenue (25) à l'autre extrémité, les pièces de retenue (25) coopérant afin de fournir un support à ladite carte à circuits imprimés (31), les pièces de retenue (25) s'étendant d'un côté au travers d'une ouverture dans le corps du connecteur (21), ouverture qui définit, de l'autre côté du corps (21), un trou d'insertion (23) destiné à recevoir un bord d'une carte à circuits imprimés.

2. Moteur miniature selon la revendication 1, caractérisé en ce que les éléments de connexion (22) sont logés dans des évidements (28) dans le corps du connecteur (21), chaque évidement étant élargi dans la partie du contact respectif (26) pour recevoir une borne d'entrée adjacente à celui-ci.

3. Moteur miniature selon la revendication 1 ou la revendication 2, caractérisé en ce que le corps du connecteur (21) a une forme essentiellement identique à celle de la plaquette d'extrémité du moteur (6) et est construit dans un matériau isolant.

4. Moteur miniature selon l'une quelconque des revendications précédentes, caractérisé en ce que chaque élément de connexion a la forme d'une languette en arc de cercle, les contacts (26) et les pièces de retenue (25) étant formés en pliant des sections de ladite plaquette.

5. Moteur miniature selon l'une quelconque des revendications précédentes, caractérisé en ce que les contacts (26) et les pièces de retenue (25) font saillie dans une même direction vers l'intérieur du corps du connecteur (21).

6. Moteur miniature selon l'une quelconque des revendications 1 à 4, caractérisé en ce que les contacts (26) et les pièces de retenue (25) font saillie dans des directions opposées, les pièces de retenue (25) faisant saillie vers l'intérieur du corps du connecteur.

7. Moteur miniature selon l'une quelconque des revendications précédentes, caractérisé en ce qu'un support de roulement forme une saillie (12) sur la surface extérieure de l'extrémité de la plaquette d'extrémité (6), le corps de l'ensemble connecteur (21) comportant une ouverture ou cavité centrale (24) qui s'emboîte sur la saillie (12) pour fixer l'ensemble connecteur à celle-ci.

8. Moteur miniature selon l'une quelconque des revendications précédentes, caractérisé en ce que des pattes d'emboîtement (33) sont formées sur le corps de l'ensemble connecteur (21), pattes qui viennent s'emboîter dans des trous d'insertion (34) formés dans la plaquette d'extrémité (6) pour fixer l'ensemble connecteur à la plaquette d'extrémité.

9. Moteur miniature selon l'une quelconque des revendications précédentes, caractérisé en ce que l'ensemble connecteur (20) est monté sur la plaquette d'extrémité (6) à l'extérieur de l'enveloppe du moteur (1).
